# EUROPEAN PATENT APPLICATION

(11) **EP 3 266 729 A1**
(43) Date of publication of application: **10.01.2018**
(21) Application number: 15884495.1
(22) Date of filing: 06.03.2015
(51) Int. Cl.: B65G 1/137, G01S 5/02, G01S 11/06

(54) **WORK SUPPORTING SYSTEM, TERMINAL DEVICE, AND SERVER DEVICE**

(71) Applicant: Hitachi Transport System, Ltd., Tokyo 135-8372 (JP)
(72) Inventor: FUJIWARA, Takayuki, Tokyo 100-8280 (JP); TSUKIJISHIN, Kenta, Tokyo 100-8280 (JP); KOSAKA, Tadayoshi, Tokyo 100-8280 (JP)
(74) Representative: Moore, Graeme Patrick
(86) International application number: PCT/JP2015/056661
(87) International publication number: WO 2016/142997

(57) **Abstract**

A task aid system which has: a terminal device; and a server that manages task information. When the information for identifying the position of the terminal device is input, the terminal device identifies, on the basis of the input information, the task location where task was performed, identifies a next task location by comparing the identified task location with the task instruction information generated by the server, and outputs the information showing the direction of the identified next task location.

## Description

### BACKGROUND OF THE INVENTION

The present invention relates to a technique for aiding tasks performed by a worker in a warehouse.

The field of physical distribution includes the tasks of sorting products designated by orders from customers, and then sending the products to the destination. In order to perform such tasks quickly and accurately, various devices and equipment are used. Previously, workers performed tasks while holding in their hand a task command terminal, which meant that one hand was in use, reducing task efficiency. In recent years, by using computer devices that could be worn on the body, known as wearable devices, the functions of the task command device could be substituted, and by therefore allowing both hands to be used, it is expected that the time required to perform tasks could be reduced. In JP 2014-122075 A (Patent Document 1), for example, a camera is provided in a head-mounted display, barcode label on the product or on the shelf is identified by image recognition, and the objects on which tasks are to be performed and the order in which tasks are to be performed are displayed, and thus, "with a device that aids the task of picking items from a warehouse or the like, a picking operation can be performed accurately and quickly".

### SUMMARY OF THE INVENTION

According to the technique disclosed in Patent Document 1, when the worker has arrived at the location where a task needs to be performed, information pertaining to the task to be performed at the location is displayed, but it is not possible to display the next task location once a task at the current location is completed.

According to an exemplary embodiment of this invention in order to solve the foregoing problems, there is provided a task aid system, comprising: a terminal device; and a server that manages task information, wherein the terminal device is configured to: determine, when information for identifying a position of the terminal device is inputted, a task location where a task was performed on the basis of the inputted information; compare the determined task location where the task was performed with task instruction information generated by the server, and determine a task location where a next task is to be performed; and output information indicating a direction of the determined task location where the next task is to be performed.

According to one aspect of the present invention, it is possible to reduce the time required to perform tasks by outputting information with instructions on the next location to perform a task.

### BRIEF DESCRIPTION OF THE DRAWINGS

FIG. 1 is a descriptive view of an example of a system configuration according to Embodiment 1 of the present invention.
FIG. 2 is a block diagram showing one example of a configuration of a task aid terminal according to Embodiment 1 of the present invention.
FIG. 3 is a block diagram showing one example of a configuration of a task information management server according to Embodiment 1 of the present invention.
FIG. 4 is a descriptive view showing one example of a delivery destination management database stored in the task information management server according to Embodiment 1 of the present invention.
FIG. 5 is a descriptive view showing one example of a sorting item warehousing management database stored in the task information management server according to Embodiment 1 of the present invention.
FIG. 6 is a descriptive view showing one example of a task instruction information management database stored in the task information management server according to Embodiment 1 of the present invention.
FIG. 7 is a descriptive view showing one example of a task result management database stored in the task information management server according to Embodiment 1 of the present invention.
FIG. 8 is a flowchart showing one example of a task information acquisition process and a task direction display process executed by the task aid terminal according to Embodiment 1 of the present invention.
FIG. 9 is a descriptive drawing of first example of task instruction outputted by the task aid terminal according to Embodiment 1 of the present invention.
FIG. 10 is a descriptive drawing of second example of task instruction outputted by the task aid terminal according to Embodiment 1 of the present invention.
FIG. 11 is a descriptive drawing of third example of task instruction outputted by the task aid terminal according to Embodiment 1 of the present invention.
FIG. 12 is a descriptive drawing of fourth example of task instruction outputted by the task aid terminal according to Embodiment 1 of the present invention.
FIG. 13 is a descriptive drawing of fifth example of task instruction outputted by the task aid terminal according to Embodiment 1 of the present invention.
FIG. 14 is a descriptive drawing of sixth example of task instruction outputted by the task aid terminal according to Embodiment 1 of the present invention.
FIG. 15 is a descriptive view of an example of a system configuration according to Embodiment 2 of the present invention.
FIG. 16 is a block diagram showing one example of a configuration of a task aid terminal according to Embodiment 2 of the present invention.
FIG. 17 is a flowchart showing one example of a task information acquisition process and a task direction display process executed by the task aid terminal according to Embodiment 2 of the present invention.
FIG. 18 is a descriptive drawing showing one example of an instruction screen for direction initialization outputted by the task aid terminal according to Embodiment 2 of the present invention.
FIG. 19 is a descriptive drawing of an example of task instructions outputted by the task aid terminal according to Embodiment 2 of the present invention.
FIG. 20 is a descriptive view showing one example of a task range intensity management database stored in the task aid terminal according to Embodiment 2 of the present invention.
FIG. 21 is a descriptive view of an example of a system configuration according to Embodiment 3 of the present invention.
FIG. 22 is a descriptive view of an example of a system configuration according to Embodiment 4 of the present invention.

### DETAILED DESCRIPTION OF EMBODIMENTS

Below, embodiments will be explained with reference to drawings. In the drawings, the same reference character is used to label same or corresponding parts. Also, the present invention is not limited to the examples shown in the drawings.

### [Embodiment 1]

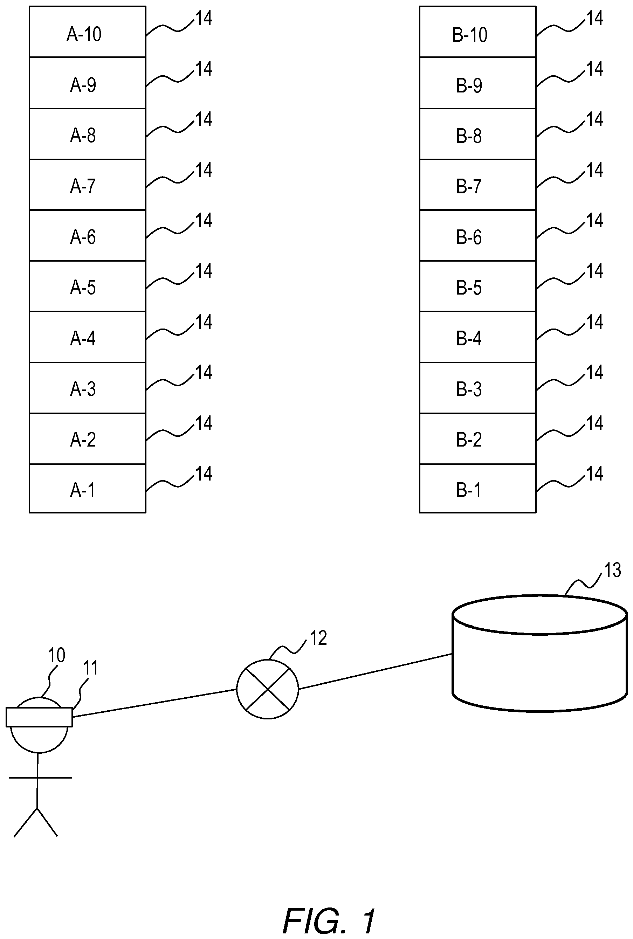

Embodiment 1 of the present invention will be described with reference to FIGs. 1 to 14.

Embodiment 1 shows an example of a case in which the present invention is applied to a total picking sort task in the physical distribution field. In physical distribution, a shortening of package delivery time from the start of delivery to arrival is a goal that is always sought after. The package being delivered passes through a plurality of intermediate points, being transported to the next intermediate point closer to the destination along the way. At the intermediate points, a task must be performed to sort various designated products (items) according to sorting destination (shops that are the destinations of the respective products, for example). By performing this task quickly, it is possible to shorten the total transportation time. In one method of sorting, a few dozen shelves for each sorting destination are prepared in a one-dimensional direction, for example, and a worker carries the products to be sorted in this direction and places the products in the corresponding shelves by sorting destination. However, conventionally, a worker had to determine which product and how many thereof to place in each sorting destination while viewing the terminal display, and thus, a long time was spent making this determination.

In the present embodiment, a technique will be described in which, in an aspect in which products are sorted in a one-dimensional direction, tasks can be performed with both hands and determination time is shortened, thereby reducing the time required to perform tasks.

FIG. 1 is a descriptive view of an example of a system configuration according to Embodiment 1 of the present invention.

The system according to the present embodiment is constituted of a worker 10, a task aid terminal 11, a network 12, a task information management server 13, and a plurality of sorting destination shelves 14.

The task aid terminal 11 is a so-called wearable device, which is a category that includes all computers that can be worn on a portion of the body of the worker 10. It is preferable that the task aid terminal 11, worn by the worker 10, be able to provide at least one of the following: image information equivalent to the visual field of the worker 10, and voice information that can be heard by the worker 10. Although not shown in FIG. 1, the system of the present embodiment includes a plurality of workers 10 and a plurality of task aid terminals 11.

The network 12 is, for example, the internet, a local area network, a USB (Universal Serial Bus), a remote USB, a wireless LAN, Bluetooth (registered trademark), infrared communication, an IC tag function, TransferJet (registered trademark), LTE, HSPA (High Speed Packet Access), or EV-DO (Evolution Data Only). The task aid terminal 11 and the task information management server 13 can be connected to each other through the network 12.

The task information management server 13 is a server computer, for example, and classifies the products to be sorted according to the number of each product and the sorting destination, and generates task instruction information to the plurality of workers 10, enabling information to be shared with the task aid terminals 11 through the network 12.

The sorting destination shelves 14 are shelves where products at the sorting destination are distributed. Each shelf 14 has a code such as "A-1", "A-2", "B-1", or "B-2" attached thereto to indicate the location, and the task aid terminal 11 reads the location code and acquires verification results from the task information management server 13, thereby acquiring information on the location of the sorting destination shelves 14. In the description below, a shelf 14 with a location of "A-1", for example, is indicated simply as "shelf A-1". This similarly applies to shelves 14 in other locations as well.

In Embodiment 1, the shelves 14 are arranged as shown in the plan view of FIG. 1 such that the shelves A-1 to A-10 are arranged in order in one row, and similarly, the shelves B-1 to B-10 are arranged in another row. The order in which the shelves A-1 to A-10 are arranged is the same as that of the shelves B-1 to B-10, and the rows are arranged such that when a worker 10 is working while facing the shelf A-1, the worker's back faces the shelf B-1.

In the present embodiment, the shelves 14 may be of any aspect as long as they remain in one partitioned area. In other words, each shelf 14 may in reality include a plurality of physical shelves or just one physical shelf, each shelf 14 may be one segmented area of a single physical shelf, each shelf 14 may be a movable shelf such as a so-called cage truck, or each shelf 14 may be a box-shaped area. In any case, as described above, each shelf 14 is identified by a code or the like, and the task information management server 13 can identify the position of each shelf 14 during a sorting task (at least the positional relationship between two shelves 14).

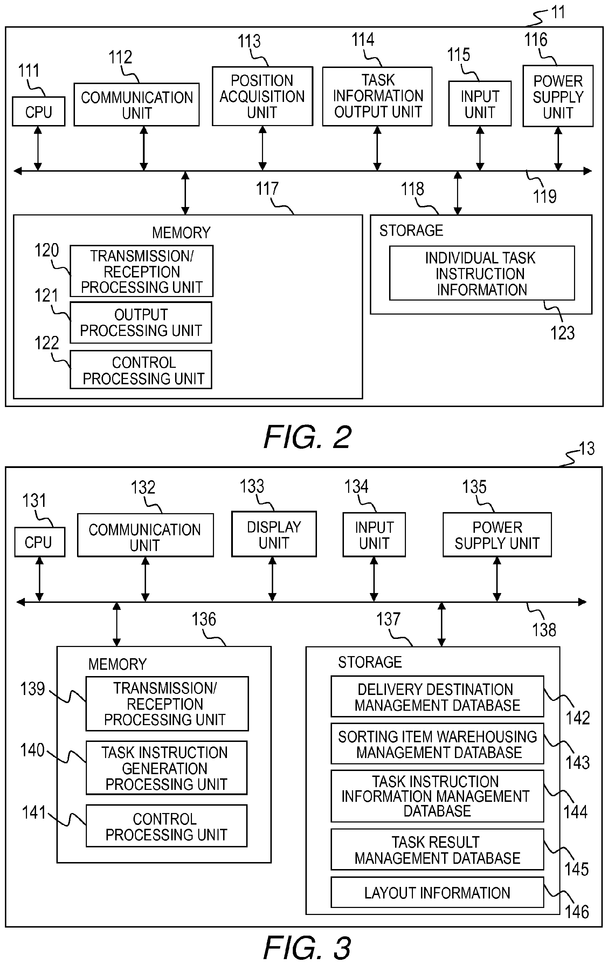

FIG. 2 is a block diagram showing one example of a configuration of a task aid terminal 11 according to Embodiment 1 of the present invention.

The task aid terminal 11 includes a CPU 111, a communication unit 112, a position acquisition unit 113, a task information output unit 114, an input unit 115, a power supply unit 116, a memory 117, a storage 118, and a bus 119. The task aid terminal 11 stores a transmission/reception processing unit 120 and an output processing unit 121 in the storage 118, a control processing unit 122 pulls a program module corresponding to each of the processing units from the storage 118 and places it in the memory 117, and by the control processing unit 122 executing the program modules, the processes of the present embodiment can be realized. These program modules may be stored in advance in the storage by the time the task aid terminal 11 is shipped, or may be stored in optical media such as a CD (compact disc), a DVD (digital versatile disc), or a Blu-Ray Disc (registered trademark) or a medium such as semiconductor memory and then installed in the device through a medium connection unit (not shown). Also, the task aid terminal 11 can download these programs through the communication unit 112 and via the network 12 from the task information management server 13 and install the programs.

The CPU 111 is a general term for a CPU (central processing unit), MPU (microprocessing unit), DSP (digital signal processor), or the like, and executes prescribed programs.

The communication unit 112 is provided with a wireless communication such as a wireless LAN, Bluetooth (registered trademark), infrared communication, an IC tag function, TransferJet (registered trademark), LTE (Long Term Evolution), HSPA (High Speed Packet Access), EV-DO (Evolution Data Only) or WiMAX, or a wired communication function such as Ethernet (registered trademark), and transmits/receives various types of information. The wireless communication function includes an antenna, a modulation/demodulation circuit, and the like. The wired communication function includes a connector, a modulation/demodulation circuit, and the like. For transmission/reception unit of information, switching can be performed as appropriate between network communication through a network, and direct communication in which various devices directly communicate without the use of a network (Bluetooth (registered trademark), wireless USB, Felica (registered trademark), ZigBee (registered trademark), Z-WAVE (registered trademark), visible light communication, infrared communication, or NFC (near field communication) (registered trademark)). The communication unit 101 may be configured to be compatible with a plurality of communication modes.

The position acquisition unit 113 is a device that acquires information for identifying the location of the task aid terminal 11. The position acquisition unit 113 is a barcode reader, a camera, or the like, for example, and can optically read a specific graphic or a character array including identification information for each shelf, displayed in a prescribed location on each shelf 14, which is a location for performing a sorting task. The specific graphic or character array to be read in is a one-dimensional barcode, a QR code, a two-dimensional barcode, or characters such as the aforementioned "A-1", including identification information for each shelf, for example. The position acquisition unit 113 may be integral with the task aid terminal 11 or may be a separate terminal worn on a glove, a wristband, or the like. If the position acquisition unit 113 is a separate terminal from the task aid terminal 11, the read-in results are transmitted to the task aid terminal 11 by wireless communication. Such communication is performed by Bluetooth (registered trademark), wireless LAN, remote USB (universal serial bus), infrared communication, TransferJet (registered trademark), LTE, HSPA (High Speed Packet Access), EV-DO (Evolution Data Only), or the like. The position acquisition unit 113 may be a camera that recognizes an object by recognizing a specific graphic or character array as an image.

If the input unit 115 includes a camera, a barcode reader, or the like, it is possible to identify the position of the task aid terminal 11 on the basis of the read-in information, and thus, the position acquisition unit 113 is unnecessary. In other words, the position acquisition unit 113 may be included in the input unit 115.

The task information output unit 114 has the function of outputting task information or the like to be mentioned later to the worker 10, for example, and specifically, the task information may be projected to the visual field of the worker 10 by optically reflecting the task information off of a reflection plate as a head-mounted display, or may be directly projected to the retina of the worker 10.

The input unit 115 includes one or more of the following: a keyboard, a mouse, a cursor key, a 10-key, or the like, receives an operation from the user, and inputs an input signal based on the operation to the CPU 111. The input unit 115 may include a microphone or a camera and generate an input signal by voice recognition, image recognition, gesture recognition, or the like, and input the generated input signal to the CPU 111. A configuration in which the task information output unit 114 and the input unit 115 are integral such as a touch panel may be used. Also, the input unit 115 may be disposed in a location away from the task aid terminal 11 as a processing unit having a similar function, with an input signal based on the operation being inputted to the CPU 111 through the network 12 or direct communication between devices.

The power supply unit 116 is constituted of a battery, an AC adapter, a charging circuit, or the like, and supplies power to each part of the task aid terminal 11 and charges the battery. Also, the power supply unit 116 confirms the remaining power of the battery of the task aid terminal 11.

The memory 117 is constituted of DRAM (dynamic random access memory) or the like, and is controlled by commands from the control processing unit 122. The functional units of the application programs stored in the storage 118 are placed in the memory 117.

The storage 118 is constituted of a storage medium installed in the task aid terminal 11, a removable external recording medium or optical disc, or the like, and stores various types of information. The storage 118 is controlled by commands from the control processing unit 122 and can store application programs, for example. The storage 118 stores various information created by the application programs such as individual task instruction information 123 for managing task instructions to each worker 10, for example.

The bus 119 is a transmission path through which the respective parts of the task aid terminal 11 transmit signals to each other.

FIG. 3 is a block diagram showing one example of a configuration of a task information management server 13 according to Embodiment 1 of the present invention.

The task information management server 13 includes a CPU 131, a communication unit 132, a display unit 133, an input unit 134, a power supply unit 135, a memory 136, a storage 137, and a bus 138. Of these parts, the parts with the same names as those shown in FIG. 2 will not be explained here since the previous explanations as those for the parts in FIG. 2 apply thereto.

The display unit 133 is constituted of a panel such as liquid crystal display, an organic EL (electroluminescent) display, or electronic paper and a driver circuit or the like, and displays desired information (characters, still images, videos, etc., for example) according to controls by the control processing unit 141. The display unit 133 may have a plurality of panels that can each display different information.

The memory 136 stores a transmission/reception processing unit 139, a task instruction generation processing unit 140, and a control processing unit 141. The storage 137 stores a delivery destination management database 142, a sorting item warehousing management database 143, a task instruction information management database 144, a task result management database 145, and layout information 146. Descriptions thereof will follow.

In the present specification, the processes executed by the CPU 111 or 131 on the basis of program modules stored in the memory 117 or 136 are sometimes described as processes executed by processing units corresponding to the program modules. For example, a process executed by the control processing unit 122 is actually executed by the CPU 111 according to a program module corresponding to the control processing unit 122 stored in the memory 117. This similarly applies to other processing units as well.

Here, a task instruction information generation process executed by the task information management server 13 and information referred to in order to execute the process will be described.

The task instruction generation processing unit 140 refers to the delivery destination management database 142 and the sorting item warehousing management database 143, and distributes tasks to each worker 10 on the basis of the delivery destination and the number of product items to be delivered.

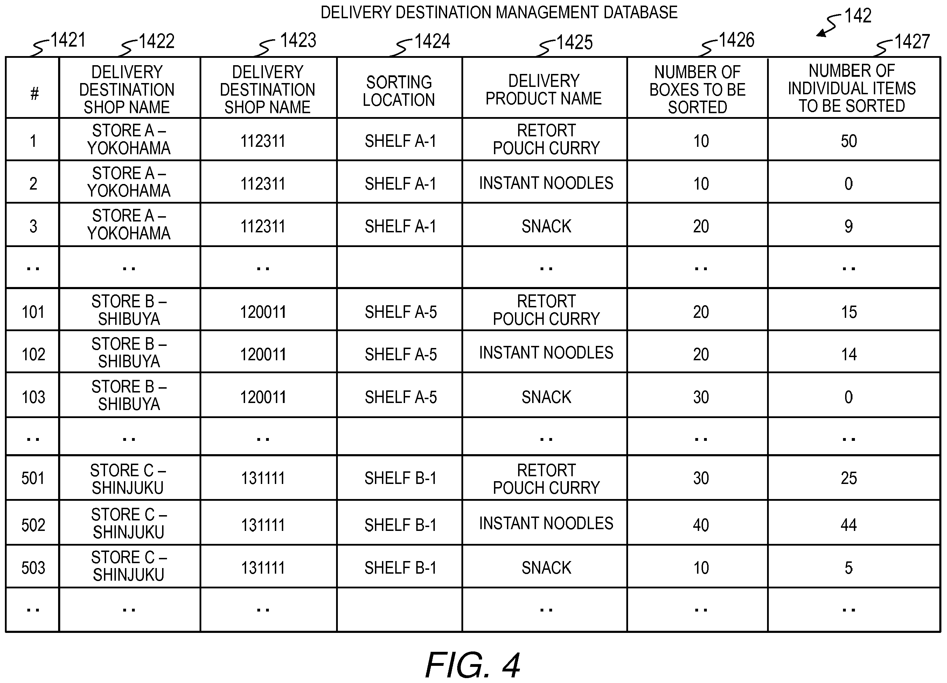

FIG. 4 is a descriptive view showing one example of the delivery destination management database 142 stored in the task information management server 13 according to Embodiment 1 of the present invention.

Each record in the delivery destination management database 142 corresponds to one product item delivered to each delivery destination. In other words each record corresponds to one sorting task in which one product item is sorted to one delivery destination. Each record includes a sequence number 1421, a delivery destination shop name 1422, a delivery destination shop code 1423, a sorting location 1424, a delivery product name 1425, a number of boxes to be sorted 1426, and a number of individual items to be sorted 1427.

The sequence number 1421 is a number for identifying each record. The delivery destination shop name 1422 and the delivery destination shop code 1423 are information for identifying the delivery destination of the product corresponding to each record.

The sorting location 1424 is information for identifying the shelf 14 corresponding to the delivery destination of each record. If the shelves 14 are arranged as shown in FIG. 1, for example, then the value of the sorting location 1424 is shelf A-1 to A-10 or shelf B-1 to B-10. The value of the sorting location 1424 may be information simply identifying each shelf 14 or may include information indicating the location of each shelf 14 (such as a coordinate value). In the example of FIG. 1, among the values A-1 to A-10 and B-1 to B-10, A and B respectively indicate rows to which the shelves 14 belong, and 1 to 10 indicates the distance from one end of the row of each shelf 14. Thus, it can be said that values such as A-1 not only identify each shelf 14 but also include information indicating the location of the shelves.

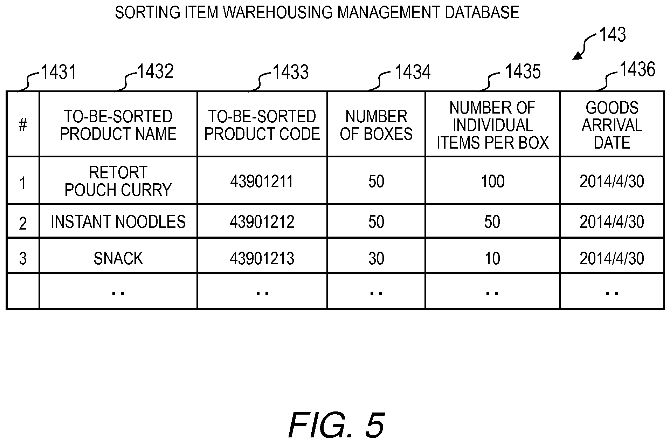

The delivery product name 1425 is the name of each product item to be delivered corresponding to each record. The number of boxes to be sorted 1426 and the number of individual items to be sorted 1427 indicate the number of product items to be delivered corresponding to each record. As shown in FIG. 5, if a plurality of items of the same product are packed in the same box, then the number of boxes to be sorted 1426 represents the number of boxes, and the number of individual items to be sorted 1427 represents the number of products taken out of the box. In general, a prescribed number of product items are packed in a box and conveyed, and, if possible, are sorted as is, but if the number of product items delivered to the destination is not divisible by the number of product items packed per box, then the leftover amount is removed from the box and sorted. In such a case, the number of sorted boxes and the number of product items taken out of the boxes are respectively managed as the number of boxes to be sorted 1426 and the number of individual items to be sorted 1427.

The delivery destination shop, the products to be sorted, and the number of products sorted differs depending on the orders of each day. In some cases, sudden changes occur within the day.

FIG. 5 is a descriptive view showing one example of the sorting item warehousing management database 143 stored in the task information management server 13 according to Embodiment 1 of the present invention.

Each record in the sorting item warehousing management database 143 corresponds to one product item stored in the warehouse to be sorted. Each record includes a sequence number 1431, a to-be-sorted product name 1432, a to-be-sorted product code 1433, a number of boxes 1434, a number of individual items per box 1435, and a goods arrival date 1436.

The sequence number 1431 is a number for identifying each record. The to-be-sorted product name 1432 and the to-be-sorted product code 1433 are information for identifying each product item in the warehouse to be sorted. The number of boxes 1434 and the number of individual items per box 1435 respectively indicate the number of boxes containing product items in the warehouse and the number of product items per box. By these numbers, the number of product items in the warehouse is determined.

Next, the task instruction generation processing unit 140 creates task instruction information for each worker on the basis of the results of distributing tasks to be performed, and stores the information in a task instruction information management database 144.

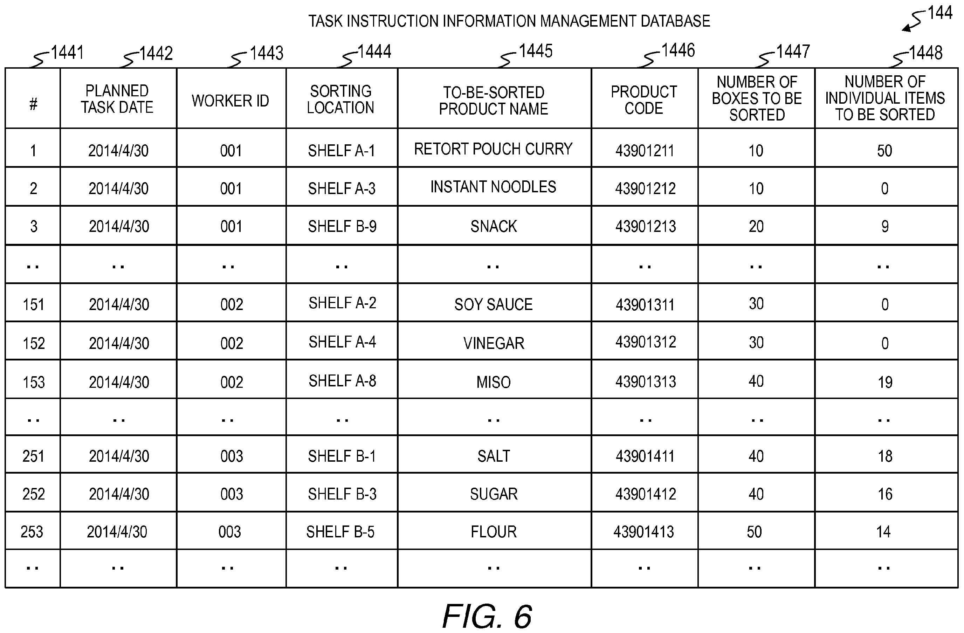

FIG. 6 is a descriptive view showing one example of the task instruction information management database 144 stored in the task information management server 13 according to Embodiment 1 of the present invention.

Each record in the task instruction information management database 144 corresponds to a sorting task instruction to one worker 10 for one destination of one product item. The task instruction information management database 144 is generated by allocating to each worker 10 a sorting task corresponding to each record in the delivery destination management database 142, for example. Specifically, each record includes a sequence number 1441, a planned task date 1442, a worker ID 1443, a sorting location 1444, a to-be-sorted product name 1445, a product code 1446, a number of boxes to be sorted 1447, and a number of individual items to be sorted 1448.

Of these, the sequence number 1441 is a number for identifying each record; the sorting location 1444, the to-be-sorted product name 1445, the number of boxes to be sorted 1447, and the number of individual items to be sorted 1448 correspond, respectively, to the sorting location 1424, the delivery product name 1425, the number of boxes to be sorted 1426, and the number of individual items to be sorted 1427 of the delivery destination management database 142; the product code 1446 corresponds to the to-be-sorted product code 1433 of the sorting item warehousing management database 143; and the planned task date 1442 and the worker ID 1443 are identification information, respectively, of the planned date when the sorting task corresponding to each record is to be performed, and the worker 10 to which the sorting task has been assigned.

The number of products determined according to the total number of boxes to be sorted 1447 of all workers pertaining to one item and the total number of individual items to be sorted 1448 matches the number of product items determined according to the number of boxes 1434 and the number of individual items 1435 of the sorting item warehousing management database 143. The sorting location 1444 is associated with the shelves 14 of FIG. 1.

The layout information 146 is information indicating where each shelf 14 is arranged. A representative example of the layout information 146 is the coordinates of each shelf 14, but as long as information enabling determination of the positional relationship between any two shelves 14 is included, any type of information may be used. If the sorting location 1444 of the task instruction information management database 144 includes information indicating the arrangement location of each shelf 14, for example, then this information can be used as the layout information 146. If the sorting location 1444 is simply identification information for each shelf 14, then the layout information 146 includes information in which the identification information of each shelf 14 is associated with the coordinates of each shelf, for example.

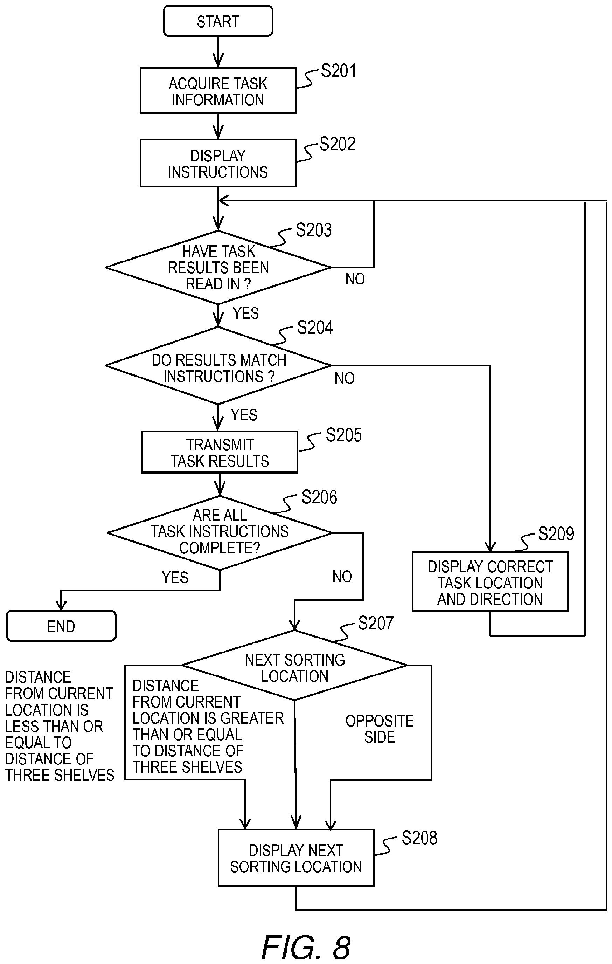

FIG. 8 is a flowchart showing one example of a task information acquisition process and a task direction display process executed by the task aid terminal 11 according to Embodiment 1 of the present invention.

The control processing unit 122 acquires task information from the task information management server 13 through the communication unit 112 and stores this information as the individual task instruction information 123 (S201). The individual task instruction information 123 is equivalent to a portion of the information stored in the task instruction information management database 144 (FIG. 6).

Specifically, the task information management server 13 transmits, to the task aid terminal 11 used by the worker 10 identified by an identification number (ID) "001", information of a record where the worker ID 1443 is "001", among the task instruction information stored in the task instruction information management database 144. The task aid terminal 11 stores the received information as individual task instruction information 123 in the storage 118 (S201). In other words, the individual task instruction information 123 is a list identifying the type of sorting tasks to be performed by each worker 10 (sorting task location, number of products to be sorted, etc.) and the order of tasks, and the sequence number 1441 may indicate the order at which each task is to be executed, for example.

The task information management server 13 may transmit, to the task aid terminal 11 of each worker 10, all information of records to be handled by each worker 10 included in the task instruction information stored in the task instruction information management database 144, but alternatively, the task information management server 13 may transmit only the information of records at the top of the execution order. There is a possibility that the progress of tasks performed by each worker 10 would vary due to the weight of the load actually carried for each task as well as the abilities of each worker 10, and thus, the task information management server 13 may switch the worker 10 to which tasks that have not yet been transmitted are assigned according to the actual task progress and transmit the tasks at an appropriate timing. In this manner, it is possible to optimize the allocation of sorting tasks throughout the warehouse.

If the sorting location 1444 corresponds to the layout information 146 as described above, then the layout information 146 is also copied to the task aid terminal 11. If the sorting location 1444 is merely identification information, then the task information management server 13 may transmit to the task aid terminal 11 a copy of the layout information 146, with the task aid terminal 11 storing the received copy in the storage 118.

In the process shown in FIG. 8, when the next sorting location is identified, the layout information is used in order to determine the direction and distance from the current location of the worker 10 (current sorting location, for example) to the next sorting location. Thus, the task aid terminal 11 may, instead of storing such layout information, transmit information to the task information management server 13 identifying the current location of the worker 10 and the next sorting location, with the task information management server 13 referring to the layout information 146 to transmit to the task aid terminal 11 information indicating the positional relationship between the current location of the worker 10 and the next sorting location, and the task aid terminal 11 storing the received information as layout information, to determine on the basis thereof the direction and distance.

Next, the output processing unit 121 outputs the instruction results to the task information output unit 114 (S202).

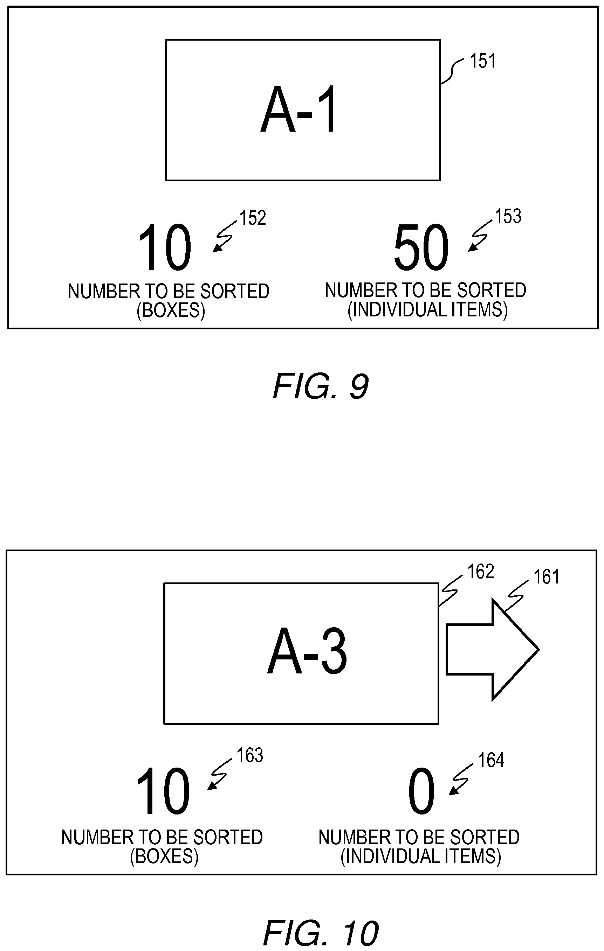

FIGs. 9 to 14 are descriptive drawings of examples 1 to 6 of task instructions outputted by the task aid terminal 11 according to Embodiment 1 of the present invention. Below, the display screen will be described with reference to these drawings.

FIG. 9 is an example of a display of instruction results outputted in S202. As shown in FIG. 9, the screen displayed by the task information output unit 114 of the task aid terminal 11 includes in the center thereof the sorting location 151, and therebelow includes the number of boxes to be sorted 152 and the number of individual items to be sorted 153. These are a portion of the information included in the individual task instruction information 123. The screen in FIG. 9 is displayed only during the task start time (that is, when the sorting task at the first sorting destination shelf 14 is started), and in screens thereafter, a graphic indicating the direction is shown as in FIGs. 10, 11, and 12.

The worker 10 using the task aid terminal 11 views the display of FIG. 9, places the designated product (that is, the product conveyed by the worker 10) on the sorting destination shelf A-1, and the position acquisition unit 113 reads the sorting destination (S203). Specifically, the worker 10 may operate a barcode reader or camera corresponding to the position acquisition unit 113 to read in the barcode displayed at the shelf A-1, or may operate the camera to read in the characters "A-1" displayed at the shelf A-1, for example. When the task of step S203 is performed, the task aid terminal 11 can determine that the current sorting task location is the shelf A-1.

Next, the control processing unit 122 compares the read-in results from the position acquisition unit 113 with the sorting location 1444 of the individual task instruction information 123 (S204). If the comparison results match (S204: Yes), then the transmission/reception processing unit 120 transmits the read-in date/time, the number of boxes to be sorted 1447, and the number of individual items to be sorted 1448 to the task information management server 13 through the communication unit 112 (S205).

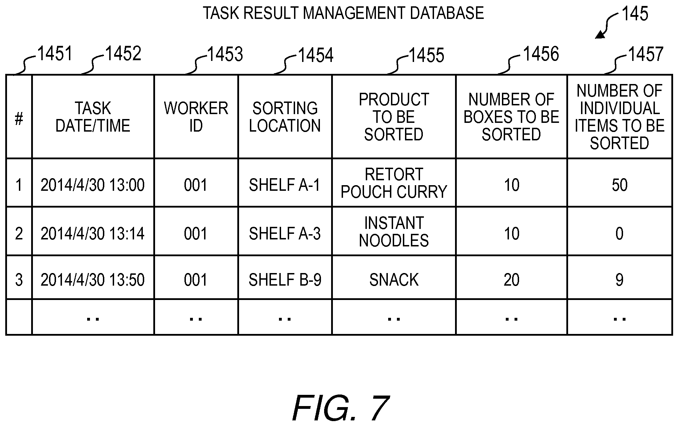

FIG. 7 is a descriptive view showing one example of the task result management database 145 stored in the task information management server 13 according to Embodiment 1 of the present invention.

Each record in the task result management database 145 stores a sequence number 1451, a task date/time 1452, a worker ID 1453, a sorting location 1454, a to-be-sorted product 1455, a number of boxes to be sorted 1456, and a number of individual items to be sorted 1457. If the task has been performed correctly, the date section of the task date/time 1452, the worker ID 1453, the sorting location 1454, the product to be sorted 1455, the number of boxes to be sorted 1456, and the number of individual items to be sorted 1457 become equal to the planned task date 1442, the worker ID 1443, the sorting location 1444, the to-be-sorted product name 1445, the number of boxes to be sorted 1447, and the number of individual items to be sorted 1448 of the task instruction information management database 144, respectively, and the time at which the task was actually performed is added to the task date/time 1452.

Next, the control processing unit 122 refers to the individual task instruction information 123 to confirm whether all tasks have been completed (S206). If all tasks have been completed (S206: Yes), the control processing unit 122 ends the process. If the tasks are not complete (S206: No), then in S207, the output processing unit 121 determines the relationship between the current sorting location determined in S203 and the next sorting location (S207), and on the basis of these determination results, outputs information with instructions on the next sorting location and direction to the task information output unit 114 (S208).

Specifically, in S207, the output processing unit 121 refers to the individual task instruction information 123 and determines which sorting task should be performed next after the immediately preceding completed sorting task, and with reference to the layout information, determines the positional relationship between the current sorting location (that is, the location where the immediately preceding sorting task was completed) and the next sorting location (that is, the location where the next sorting task should be performed). More specifically, the output processing unit 121 determines the direction of the next sorting location relative to the direction that the worker 10 is facing at the current sorting location, and the distance required for the worker 10 to reach the next sorting location from the current sorting location. The output processing unit 121 then outputs the information indicating the determined direction and distance to the task information output unit 114 in S208.

If, for example, the shelves 14 are arranged as shown in FIG. 1, the sorting task at the shelf A-1 is complete, and the next sorting location is the shelf A-3, then under the assumption that the worker 10 is facing the direction of the shelf A-1, which is the current sorting location, as soon as the position acquisition unit 113 has read in the sorting destination in S203, it is determined on the basis of the layout information that the shelf A-3, which is the next sorting location, is to the right of where the worker 10 is currently located, and that the movement distance thereto is equal to the distance of three shelves 14 (see plan view of FIG. 1). The screen outputted in S208 in such a case is shown in FIG. 10.

In the example of FIG. 10, the next sorting location is indicated by the direction of the arrow-shaped graphic 161, and the distance thereto is indicated by the number of graphics 161 displayed. In this example, the shelf A-3, which is the next sorting location, is to the right of where the worker 10 is currently located, and thus, a right-facing graphic 161 is displayed. Also, the distance to the shelf A-3 is less than or equal to the distance of three shelves 14, and thus, only one graphic 161 is displayed. Also, similar to the example of FIG. 9, the next sorting location 162 (shelf A-3 in FIG. 10), the number of boxes to be sorted 163, and the number of individual items to be sorted 164 at the next sorting location are displayed on the screen. By this display, the worker 10 can be informed of the direction of the next sorting location.

When a screen such as that of FIG. 10 is displayed, the worker 10 is directly facing the sorting destination shelf A-1, and the visual direction of the worker 10 is substantially perpendicular to the direction in which the shelves A-1 to A-10 are arranged, and if the task aid terminal 11 has a head-mounted display, then the visual direction at that time is substantially the same as the visual direction when viewing the head-mounted display. Thus, by displaying the right-facing arrow graphic 161 with reference to the aforementioned perpendicular direction, the worker 10 can be instructed as to which direction to move.

However, thereafter, once the worker 10 starts moving in the direction of the shelf A-10, the worker's visual direction becomes substantially parallel to the direction in which the shelves A-1 to A-10 are arranged, and thus, if the task aid terminal 11 continues to display the screen of FIG. 10, this can confuse the worker 10. Thus, after a prescribed time has elapsed since the graphic 161 indicating the direction in FIG. 10 starts being displayed, the task aid terminal 11 stops displaying the graphic 161 (that is, the graphic 161 stops being displayed, and thereafter, only the next sorting location 162, the number of boxes to be sorted 163, and the number of individual items to be sorted 164 are displayed). Here, it is preferable that the prescribed time be a length of time sufficient for the worker 10 to view the graphic 161 and recognize the direction, while being a short enough not to confuse the worker 10 who has started moving. An example of such a length of time is approximately two seconds.

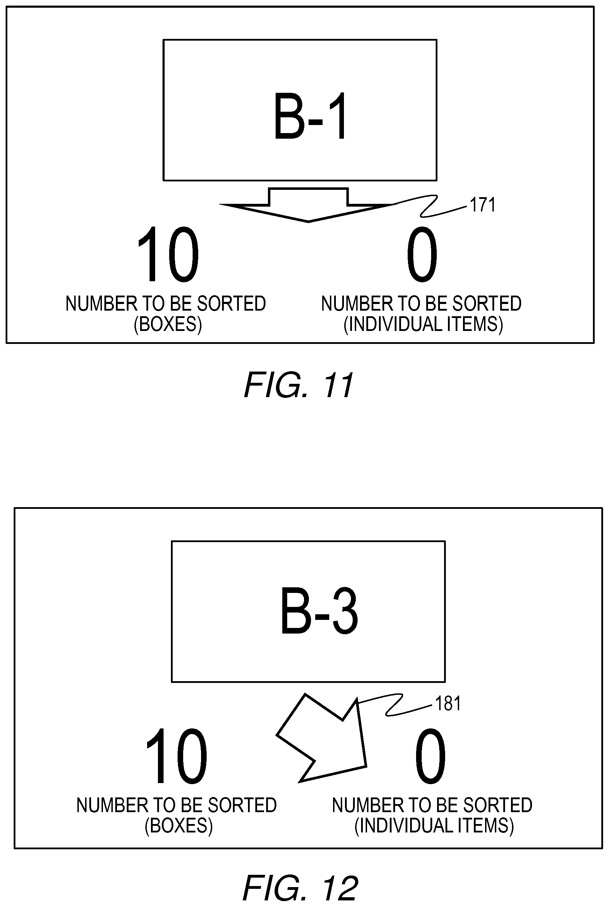

FIG. 11 shows an example of a screen displayed during S208 for a case in which it is determined in S207 that the next sorting location is the shelf B-1, which is across the passageway from the current sorting location (shelf A-1). In this example, a downward-facing graphic 171 is displayed to indicate that the shelf B-1, which is the next sorting location, is in the opposite direction to the visual direction of the worker 10 (that is, behind the worker).

FIG. 12 shows an example of a screen displayed during S208 for a case in which it is determined in S207 that the next sorting location is the shelf B-3, which is across the passageway from and diagonal to the current sorting location (shelf A-1). In this example, a lower right-facing graphic 181 is displayed to indicate that the shelf B-3, which is the next sorting location, is to the rear and right of the visual direction of the worker 10.

As shown in the display of FIGs. 10, 11, and 12, if the direction of the next sorting location in relation to the current sorting location is displayed, then the worker 10 is made aware of the direction of the next sorting location, and is able to move more quickly in that direction, thereby increasing the speed at which tasks are accomplished.

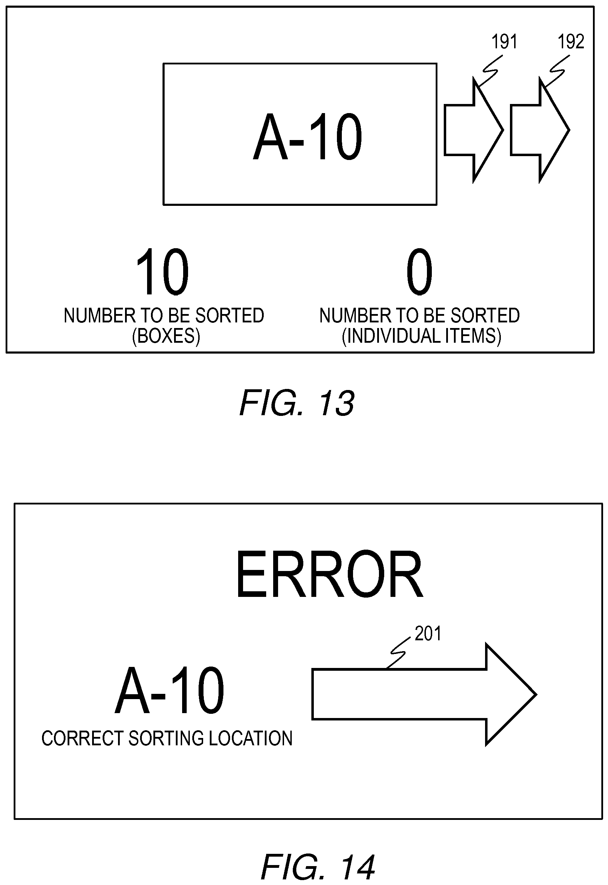

FIG. 13 shows an example of a screen displayed during S208 for a case in which it is determined in S207 that the next sorting location is the shelf A 10, which is in the same row as the current sorting location (shelf A 1) but is farther way. In this example, two right-facing arrow graphics 191 and 192 are displayed. The fact that these arrows face right, similar to the example of FIG. 10, indicates that the next sorting location is to the right of the worker 10. The fact that two graphics 191 and 192 are displayed indicates that the next sorting location is far from the current sorting location. It may be determined, for example, that if the distance from the current sorting location to the next sorting location is less than or equal to the distance of three shelves 14, then the distance is short, and if this distance exceeds the distance of three shelves 14, then the distance is far. Similar to FIG. 10, the graphics 191 and 192 are displayed for two seconds and then stop being displayed. If, as shown in FIG. 13, it can be determined that the distance between the current sorting location and the next sorting location is far, then the worker 10 can start moving earlier, and by not paying attention to shelves 14 close to the current sorting location when searching for the next sorting location, the time taken to search for the next sorting location can be shortened, thereby increasing the speed at which tasks are performed.

An example was described in which the right-facing arrow graphic 161 and the like in FIGs. 10 and 13 are displayed on the right hand side of the screen, but if the next sorting location is to the left of the worker 10 such as a case in which the current sorting location is the shelf B-1 in FIG. 1 and the next sorting location is the shelf B-10, then a left-facing arrow graphic is displayed on the left hand side of the screen.

If it is determined in S204 that the comparison results do not match (S204: No), then the control processing unit 122 outputs, to the task information output unit 114, the correct task location and direction (S209) and returns the process to before S203.

FIG. 14 shows an example of a screen displayed in S209. Specifically, FIG. 14 shows a case in which the correct sorting location is the shelf A-10 but the worker inadvertently performed a sorting task at one of shelves A-1 to A-9. In this example, the right-facing arrow graphic 191 indicates the direction of the next correct sorting location with respect to the direction of the worker 10 when the task results are being read in during S203 (direction perpendicular to that in which the sorting destination shelves A-1 to A-10 are arranged). Similar to FIG. 10, the graphic of FIG. 14 is displayed for two seconds and then stops being displayed, and then the screen of S208 is displayed.

As described above, according to the present embodiment, the sorting location and direction are indicated by simple characters and graphics, and by displaying on a head-mounted display directly in front of the eyes of the worker 10, the time needed for the worker 10 to determine the location of the next task location can be reduced.

In the present embodiment, a case was described in which there is only one worker 10, but the task instruction information management database 144 can register a plurality of workers 10, and a plurality of workers 10 may perform the task.

In the present embodiment, a case was described in which a sorting task is being performed, but the embodiment may be applied to a picking task in which a product is picked at a designated location.

Additionally, in the present embodiment, an example was described in which the direction of the next sorting location and the distance thereto are indicated by the direction and number of arrow graphics, but such information may be displayed in another form. For example, the task aid terminal 11 may display the direction of the next sorting location by a graphic other than an arrow. Also, the task aid terminal 11 may use a distance other than the distance of three shelves 14 as the standard for determining whether the distance to the next sorting location is far, the task aid terminal 11 may display display a more precise distance by a method such as displaying three arrow graphics if the distance to the next sorting location exceeds the distance of six shelves 14, for example, or the task aid terminal 11 may, instead of indicating distance by the number of arrow graphics, indicate the distance by shape, length, or the like of the arrow graphic or display a numerical value indicating the distance.

A portion of the process of FIG. 8 may be performed by the task information management server 13. In S203, the task aid terminal 11 may transmit the read in task results to the task information management server 13, with the task information management server 13 performing S204 to S207 with reference to information stored in the storage 137 and transmitting information outputted in S208 or S209 to the task aid terminal 11, and the task aid terminal 11 executing S208 or S209 on the basis of the received information.

In the present embodiment, a mode was described in which the task information output unit 114 operates as a head-mounted display, and the information is displayed in front of the eyes of the worker 10, but a mode may be adopted in which the task information output unit 114 is an earphone or a speaker and task instruction information (information such as the distance to the next sorting location and the number of product items to be sorted at the next sorting location, for example) is outputted as speech. In such a case, a head-mounted display is not required, and thus, a system with a less expensive configuration can be realized.

### [Embodiment 2]

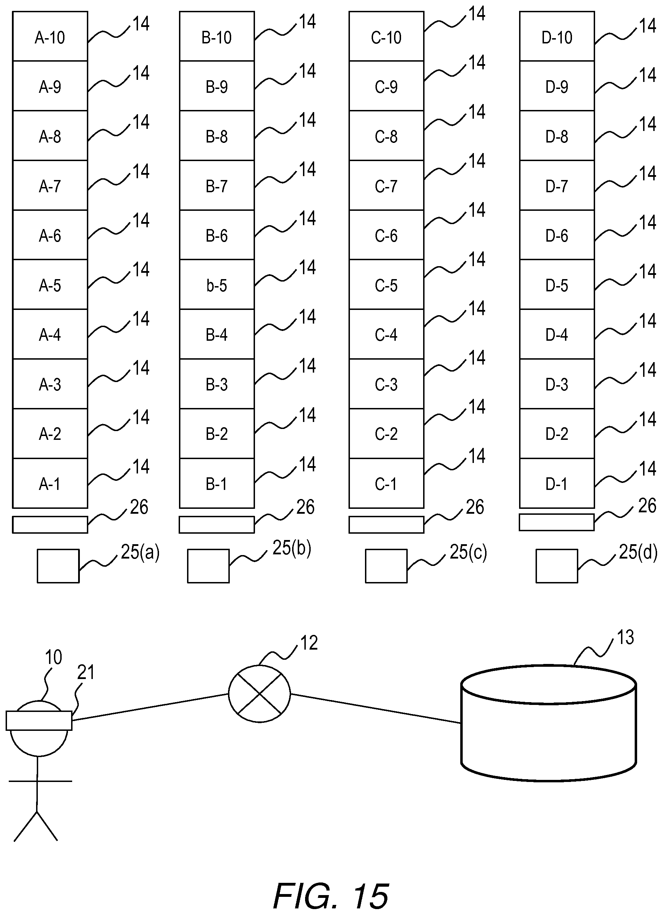

Embodiment 2 of the present invention will be described with reference to FIGs. 15 to 20. Aside from the differences described below, the various components of the system of Embodiment 2 have the same functions as the components of Embodiment 1 that are displayed in FIGs. 1 to 14 and that are assigned the same reference characters, and thus, descriptions thereof are omitted.

In Embodiment 1, an example was described in which the sorting destination shelves 14 are arranged in two rows facing each other, and the worker moves in a one-dimension direction between these shelves in performing the sorting task. However, if the sorting shelves 14 are arranged two-dimensionally and the worker performs a sorting task while moving in two-dimensional directions, then with the method of Embodiment 1, the same direction for the sorting location can indicate a large number of sorting destination shelves 14, which presents a difficulty in reducing the determination time. In the present embodiment, a method will be described in which the determination time for a sorting task is reduced when the sorting destination shelves 14 are arranged two-dimensionally.

FIG. 15 is a descriptive view of an example of a system configuration according to Embodiment 2 of the present invention.

The system according to the present embodiment is constituted of a worker 10, a task aid terminal 21, a network 12, a task information management server 13, sorting destination shelves 14, task range information transmitting devices 25 (25(a) to 25(d)), and direction adjustment markers 26.

The task range information transmitting devices 25 are devices that continuously emit a unique signal. The task aid terminal 21 can identify the task range information transmitting device 25 with the strongest signal even when there are a plurality of task range information transmitting devices 25. Examples of such a signal include iBeacon (registered trademark), Zigbee (registered trademark), ZWAVE, and the like.

The direction adjustment markers 26 are symbols pasted on a side to be the reference in setting the direction of the task aid terminal 21. By the worker 10 wearing the task aid terminal 21 facing the direction of the direction adjustment marker 26, a direction detection unit 212 of the task aid terminal 21 can adjust the initial position of the direction.

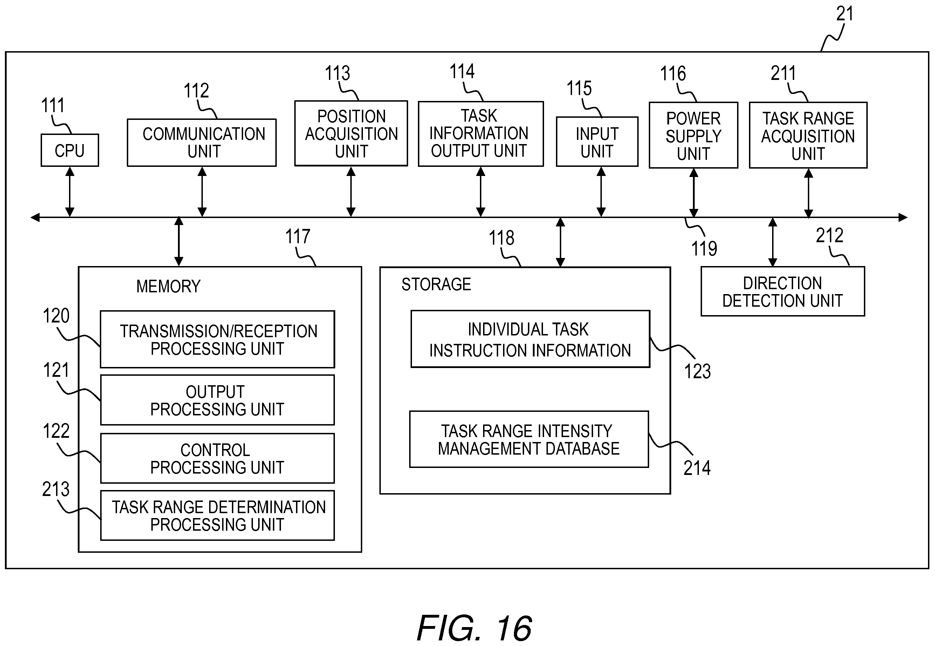

FIG. 16 is a block diagram showing one example of a configuration of a task aid terminal 21 according to Embodiment 2 of the present invention.

The task aid terminal 21 includes a CPU 111, a communication unit 112, a position acquisition unit 113, a task information output unit 114, an input unit 115, a power supply unit 116, a task range acquisition unit 211, the direction detection unit 212, a memory 117, a storage 118, and a bus 119. Descriptions of parts with the same reference characters as Embodiment 1 will be omitted.

The task range acquisition unit 211 is a reception unit that can receive signals emitted by the task range information transmitting device 25. The signal transmitted by the task range information transmitting device 25 includes information enabling acquisition of the position of the worker 10. Specifically, as will be described later, the area in which the worker 10 is present is determined on the basis of identification information included in the signal emitted by the task range information transmitting device 25, and the position of the worker 10 in the area is determined on the basis of the intensity of the signal. If the input unit 115 includes the reception unit such as described above, the task aid terminal 21 need not be provided with the task range acquisition unit 211. In other words, the task range acquisition unit 211 may be included in the input unit 115.

The direction detection unit 212 includes a gyro sensor or the like, for example, and detects the orientation of the task aid terminal 21.

The memory 117 stores, in addition to a program module similar to that stored in the memory 117 of Embodiment 1, a program module corresponding to a task range determination processing unit 213. Also, the storage 118 stores a task range intensity management database 214 in addition to the individual task instruction information 123. Details thereof will be described later.

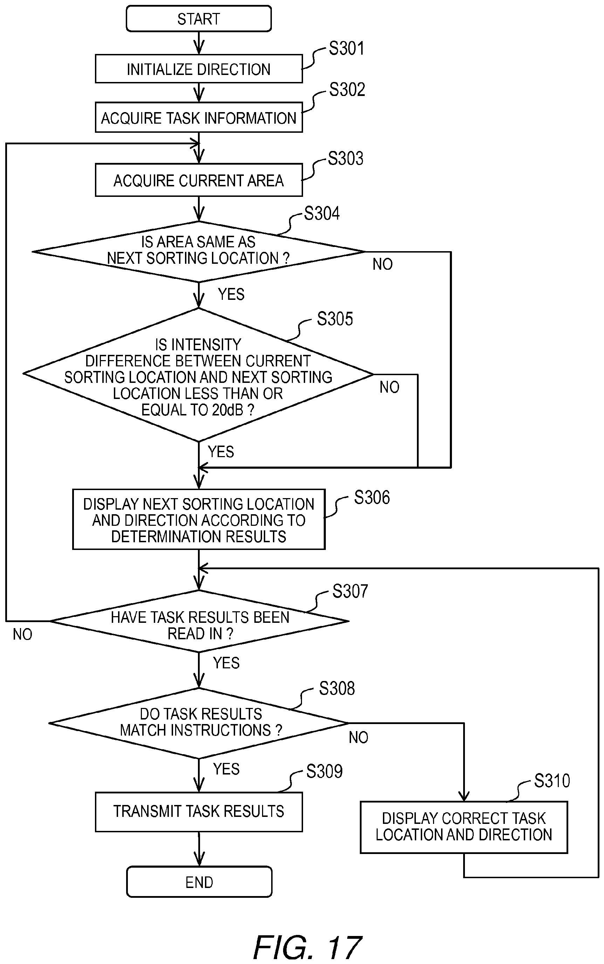

FIG. 17 is a flowchart showing one example of a task information acquisition process and a task direction display process executed by the task aid terminal 21 according to Embodiment 2 of the present invention.

The control processing unit 122 detects the current direction through the direction detection unit 212, and designates, as the initial direction, the direction detected when the worker 10 wearing the task aid terminal 21 is facing the direction of the direction adjustment marker 26 (S301).

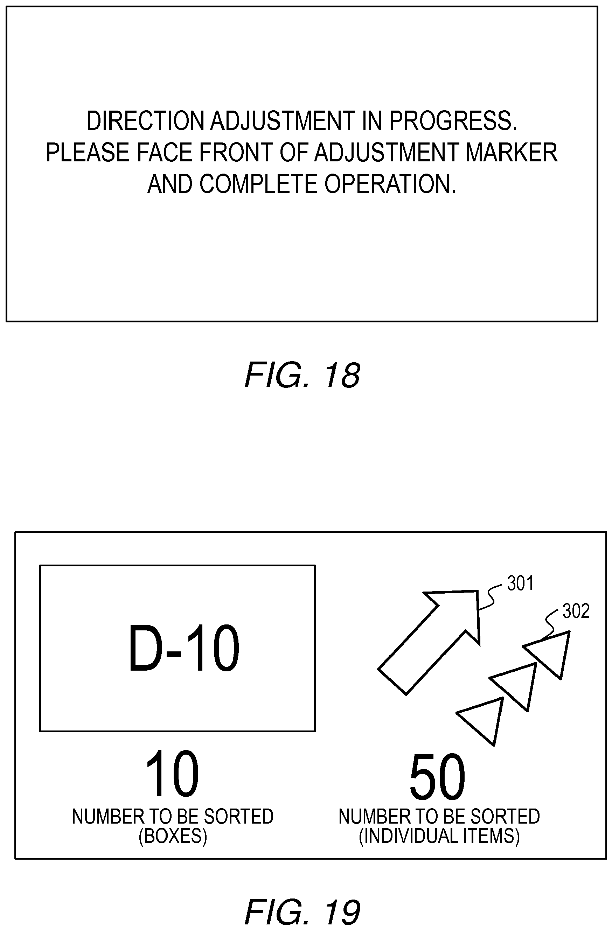

FIG. 18 is a descriptive drawing showing one example of an instruction screen for direction initialization outputted by the task aid terminal 21 according to Embodiment 2 of the present invention.

As shown in FIG. 18, the task information output unit 114 outputs a message screen instructing the worker to face the front of the direction adjustment marker 26. After the screen of FIG. 18 is displayed, the worker 10 wearing the task aid terminal 21 performs an operation, thereby completing adjustment of the initial direction. Specifically, if the worker 10 is in front of the row of shelves A-1 to A-10, for example, then he/she stands in front of the direction adjustment marker 26 at the end of the row while facing the direction adjustment marker 26 and performs a prescribed operation. Here, the operation method may be to recognize a verbal statement such as "completed", which is spoken into a microphone provided in the input unit 115, or to recognize a gesture, finger movement, or the like of the worker 10 by a camera provided in the input unit 115. Alternatively, a barcode reader of the position acquisition unit 113 may be used to read in a barcode signifying "completed". By this operation, the direction detection unit 212 detects the direction. This direction is designated as the initial direction. The direction detection unit 212 can detect the direction relative to the initial direction, and thus, by detecting the initial direction when the worker 10 is facing a predetermined direction (in other words, when the orientation of the task aid terminal 21 relative to the direction adjustment marker 26 satisfies a prescribed condition), it is thereafter possible for the task aid terminal 21 to determine the direction that the worker 10 is facing using the direction detection unit 212.

The control processing unit 122 acquires task information from the task information management server 13 through the communication unit 112 and stores this information as the individual task instruction information 123 (S302). The individual task instruction information 123 is equivalent to that disclosed in Embodiment 1, and thus, descriptions thereof will be omitted. Next, the task range acquisition unit 211 receives signals emitted by the task range information transmitting device 25 and acquires the current area (S303). In the example of FIG. 15, the areas are formed by dividing the region into four areas A, B, C, and D from the left. That is, each region indicates the front of the row of shelves A-1 to A-10, the front of the row of shelves B-1 to B-10, the front of the row of shelves C-1 to C-10, and the front of the row of shelves D-1 to D-10. The task range information transmitting devices 25 (that is, the respective task range information transmitting devices 25(a) to 25(d)) are disposed in the respective areas. Below, a process for when the current location of the worker is the shelf A-1 and the next sorting location is the shelf D-10 will be described.

The task range determination processing unit 213 compares the area to which belongs the current location of the worker 10 (at this stage, the current sorting location) determined on the basis of the signal of the task range information transmitting device 25 received through the task range acquisition unit 211, with the area to which the next sorting location belongs, and determines whether these are the same area (S304). If the current area is A and the area of the next sorting location is D (S304: No), then the output processing unit 121 outputs the next sorting location and the direction thereof to the task information output unit 114 (S306). The screen outputted at this time will be explained with reference to FIG. 19.

FIG. 19 is a descriptive drawing of an example of task instructions outputted by the task aid terminal 21 according to Embodiment 2 of the present invention.

An arrow graphic 301 indicates the direction of the next sorting location and dynamically changes according to the direction that the worker faces. Meanwhile, the one or more (three in the example of FIG. 19) triangle graphics 302 are a measure indicating the distance from the current sorting location to the next sorting location, and if the areas differ, then it is assumed that the distance is far, and three graphics are displayed.

The display method of FIG. 19 is one example, and the task aid terminal 21 may display the direction of the next sorting location with a graphic other than an arrow, for example, or may indicate the distance according to the shape, number, or the like of the arrow graphic 301, for example, without using the graphics 302.

The control processing unit 122 confirms whether the position acquisition unit 113 has read in the sorting location in S307. This determination is performed similarly to S203 of FIG. 8. If the sorting location has not been read in (S307: No), then the control processing unit 122 again performs the process of S303.

Next, a case will be described in which the worker 10 follows the task instructions to move from the area A to the area D.

The task range determination processing unit 213 compares the area to which belongs the current location of the worker 10 determined on the basis of the signal of the task range information transmitting device 25 received through the task range acquisition unit 211, with the area to which the next sorting location belongs, and determines whether these are the same area (S304). If it is determined that both the current area and the area of the next sorting location are D (S304: Yes), then the task range determination processing unit 213 determines whether the distance from the current location of the worker 10 to the next sorting location is less than or equal to a prescribed value (S305). If it is determined that the distance from the current location of the worker 10 to the next sorting location is greater than the prescribed value (S305: No), then the output processing unit 121 outputs the next sorting location and the direction thereof to the task information output unit 114 (S306).

Here, the distance from the current position of the worker 10 to the next sorting location, which are in the same area, is determined on the basis of the intensity of the signal received by the task aid terminal 21 from the task range information transmitting device 25. The task range information transmitting device 25 emits radio waves radially, and thus, the signal intensity attenuates with greater distance. Relying on this principle, if the difference between the intensity of the signal received by the task aid terminal 21 from the task range information transmitting device 25 at the current location and the intensity of the signal that would be received by the task aid terminal 21 from the task range information transmitting device 25 if the worker 10 were located at the next sorting location is less than or equal to a prescribed value (20dB, for example), then the task range determination processing unit 213 determines that the distance from the current location of the worker 10 to the next sorting location is less than or equal to the prescribed value.

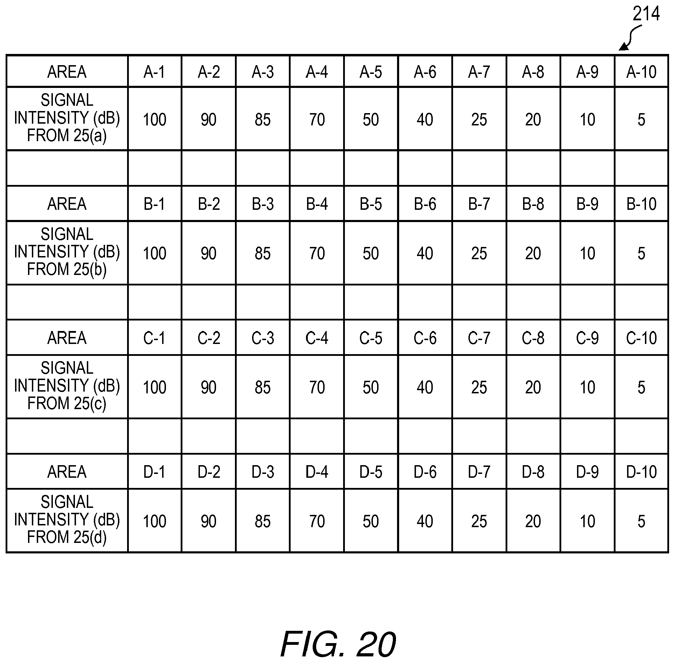

FIG. 20 is a descriptive view showing one example of the task range intensity management database 214 stored in the task aid terminal 21 according to Embodiment 2 of the present invention.

The task range intensity management database 214 records the intensity of signals from the task range information transmitting devices 25 received in each sorting location (that is, each shelf 14) of each area. For example, in the area A, the signal intensity of the task range information transmitting device 25(a) is the strongest at the closest shelf A-1 and the weakest at the farthest shelf A-10. This similarly applies to the areas B to D. These intensity values are actual measurements taken in each area in advance, for example.

Each task range information transmitting device 25(a) to 25(d) transmits a different frequency signal, for example, such that the signals do not interfere with each other. Thus, the task aid terminal 21 can measure the intensity of the signal received from each of the task range information transmitting devices 25(a) to 25(d). If the signal received from the task range information transmitting device 25(d) is the strongest, for example, then the task aid terminal 21 determines that the worker 10 is in the area D, and with reference to the task range intensity management database 214 determines a shelf 14 in the area D (that is, one of shelves D-1 to D-10) with a signal intensity that corresponds the closest to intensity of the received signal to be the current location of the worker 10.

In S305, if the signal from the task range information transmitting device 25(d) received by the task aid terminal 21 is the strongest, and the difference between that signal intensity and the signal intensity corresponding to the next sorting location (shelf D-19, for example) acquired from the task range intensity management database 214 is no less than 20dB, then it is determined that the worker 10 is in the same area as the next sorting location, and that the distance between the current location and the sorting location exceeds a prescribed value. In such a case, the graphic 301 indicates the direction of the next sorting location relative to the current orientation of the worker 10 (that is, the orientation of the task aid terminal 21 worn by the worker 10).

In the present embodiment, the task aid terminal 21 includes the direction detection unit 212, and acquires in advance the initial direction, and thus, the output processing unit 121 can acquire the direction relative to the next sorting location no matter what direction the worker 10 faces. The relative direction acquired by the output processing unit 121 in this manner is transmitted to the task information output unit 114, and the task information output unit 114 outputs the graphic 301 indicating the direction, and thus, the graphic 301 dynamically changes direction according to the orientation of the worker 10. Therefore, in the present embodiment, unlike Embodiment 1, the display of the direction need not end after a prescribed time (two seconds, for example), but instead, the direction can continue to be displayed until the worker 10 arrives at the next sorting location.

Meanwhile, the graphics 302 show the distance from the current location of the worker 10 to the next sorting location. If the worker 10 is in the same area as the sorting location but the distance between the locations exceeds a prescribed value, then the task information output unit 114 may display two triangular graphics 302, for example.

The control processing unit 122 confirms whether the position acquisition unit 113 has read in the sorting location in S307. If the sorting location has not been read in (S307: No), then the control processing unit 122 again performs the process of S303.

Next, the worker moves, and if the difference between the intensity of the signal received from the task range information transmitting device 25(d) in the area D and the intensity of the signal at the next sorting location acquired from the task range intensity management database 214 is less than or equal to 20dB (S305: Yes), the output processing unit 121 outputs the direction of the next sorting location to the task information output unit 114 (S306).

Specifically, at this point, the graphic 301 indicates the direction of the next sorting location relative to the current orientation of the worker 10, and dynamically changes according to the orientation of the worker 10. Meanwhile, the graphics 302 show the distance from the current location to the next sorting location. If, in the same area, the difference in signal intensity from the task range information transmitting devices 25 is 20dB or less, then the worker 10 may be considered to be in the area and close to the sorting location, and therefore, the task information output unit 114 may display one graphic 302.

The control processing unit 122 confirms whether the position acquisition unit 113 has read in the sorting location in S307. If the sorting location has been read in (S307: Yes), the control processing unit 122 compares the read-in results from the position acquisition unit 113 with the sorting location 1444 of the individual task instruction information 123 (S308). If the comparison results match (S308: Yes), then the transmission/reception processing unit 120 transmits the read-in date/time, the number of boxes to be sorted 1447, and the number of individual items to be sorted 1448 to the task information management server 13 through the communication unit 112 (S309), and the process ends.

If the comparison results do not match (S308: No), then the control processing unit 122 outputs, to the task information output unit 114, the correct task location and direction (S310), and then returns the process to before S307.

In the example above, a different number of graphics 302 are displayed for a case in which the current sorting location and the next sorting location belong to different areas, a case in which the sorting locations belong to the same area but the distance is greater than or equal to a prescribed value, and a case in which the sorting locations belong to the same area and the distance is less than or equal to the value. However, this manner of display is one example, and the task aid terminal 21 may determine how display is performed by another standard. For example, the task aid terminal 21 may merely display a number of graphics 302 that is substantially proportional to the distance that the worker would have to move. In any case, it is preferable that the display standard be determined such that the sense of distance felt by the worker in actual motion does not diverge from the sense of distance intuitively understood according to the graphics 302.

A portion of the process of FIG. 17 may be executed by the task information management server 13. Information similar to the task range intensity management database is stored in the storage 137 of the task information management server 13, for example. The task aid terminal 21 may transmit the area acquired in S303 and the intensity of the received signal to the task information management server 13, with the task information management server 13 performing S304 and S305 on the basis of information received by the task information management server 13 and information stored in the storage 137, determining the information to be displayed in S306, and transmitting the information to the task aid terminal 21. The task aid terminal 21 executes S306 on the basis of the received information and transmits to the task information management server 13 the read in results of S307. The task information management server 13 executes S308 and S309, and if necessary, transmits information to be displayed in S310 to the task aid terminal 21, and the task aid terminal 21 executes S310 on the basis of the received information.

Also, the position of the worker 10 is determined on the basis of the intensity of the received wireless signal and the identification information included in the signal in this example, but a method may be used other than determining the position on the basis of the received wireless signal. In an environment where a GPS (Global Positional System) signal can be received, for example, the position of the worker 10 may be determined according to the GPS signal.

As described above, according to the present embodiment, by detection of the direction and simple detection of the direction by the task range information transmitting devices 25, it is possible to reduce the time required for the worker 10 to determine the position of the next sorting location even with a sorting task that requires the worker 10 to move in a two-dimensional direction.

### [Embodiment 3]

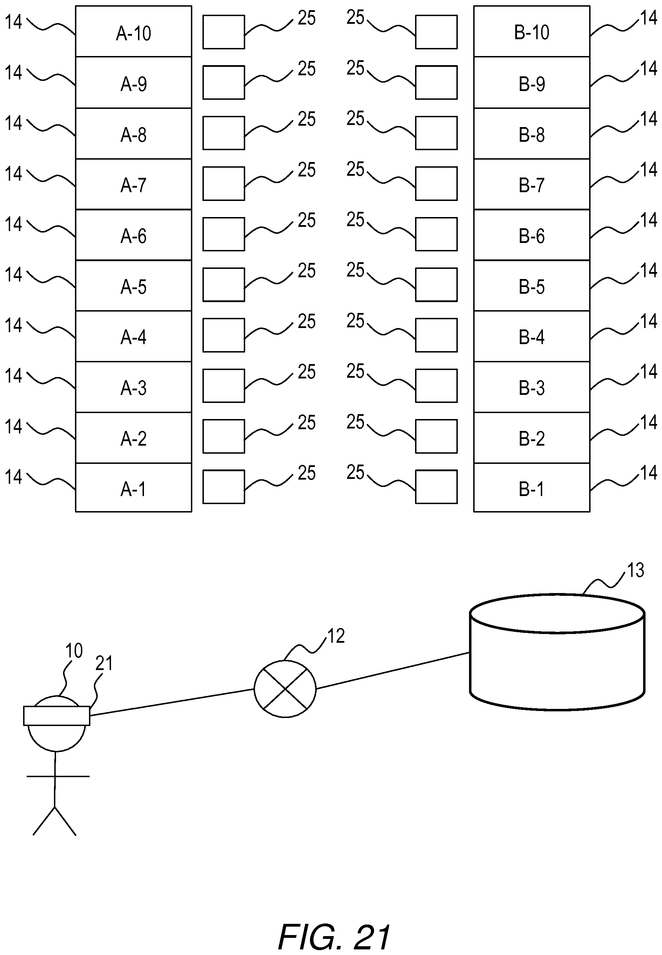

Embodiment 3 of the present invention will be described with reference to FIG. 21. Aside from the differences described below, the various components of the system of Embodiment 3 have the same functions as the components of Embodiment 1 or 2 that are displayed in FIGs. 1 to 20 and that are assigned the same reference characters, and thus, descriptions thereof are omitted.

In Embodiment 1, the position acquisition unit 113 was a barcode reader, and in S203, the position acquisition unit 113 read in a graphic or characters to identify the position of the sorting shelves 14.

On the other hand, in Embodiment 3, a case will be described in which a task range information transmitting device 25 is installed at each sorting destination, and the process of S203 is performed by the task range acquisition unit 211 reading in the intensity of the signal emitted by the task range information transmitting devices 25.

FIG. 21 is a descriptive view of an example of a system configuration according to Embodiment 3 of the present invention.

The system according to the present embodiment is constituted of a worker 10, a task aid terminal 21, a network 12, a task information management server 23, sorting destination shelves 14, and task range information transmitting devices 25. As shown in FIG. 21, one task range information transmitting device 25 is installed at each sorting shelf 14.

The task aid terminal 21 of the present embodiment is similar to the task aid terminal 21 of Embodiment 2 (see FIG. 16) other than that the storage 118 further stores a sorting location signal management database (not shown). However, the task aid terminal 21 of the present embodiment may not be provided with a direction detection unit 212.

An example of a task information acquisition process and a task direction display process in the task aid terminal 21 will be described with reference to FIG. 8. S201 and S202 are the same process as in FIG. 8, and thus, descriptions thereof will be omitted.

In S203, when the worker 10 sorts the relevant products at the designated sorting shelf 14, the worker notifies the task aid terminal 21 of completion of the sorting task. Speech, gestures, finger movements or the like indicating that the worker has completed sorting may be inputted into a microphone, camera, or the like included in the input unit 134, for example. When the control processing unit 122 receives a notification from the worker 10 through the input unit 134, the task range determination processing unit 213 confirms the intensity of the signal received by the task range acquisition unit 211 from the task range information transmitting devices 25, and if the signal intensity is greater than or equal to a prescribed value (80dB, for example), then the process progresses to S204.

Here, the fact that the intensity of the signal received from the task range information transmitting devices 25 is greater than or equal to the prescribed value indicates that the worker 10 has come to within a prescribed distance from the shelf 14 at which the task range information transmitting device 25 is installed. In the present embodiment, when the worker 10 comes to within a prescribed distance of the shelf 14, it is determined that the sorting task at that shelf 14 has been performed (that is, task results were read in during S203). The shelf 14 identified by the signal ID is the shelf at which a sorting task was performed (that is, the current sorting location).

In S204, the task range determination processing unit 213 refers to the sorting location signal management database and determines the sorting location matching the ID of the confirmed signal (signal having an intensity of 80dB or greater in the above example), compares the identified sorting location with the sorting location 1444 of the individual task instruction information 123, and determines whether the two sorting locations match.

The task range information transmitting device 25 installed at each sorting shelf 14 has a unique ID. The sorting location signal management database manages the unique IDs of each of the task range information transmitting devices 25.

If, as a result of comparison, the IDs match (S204: Yes), then the process progresses to S205. If, as a result of comparison, the IDs do not match (S204: No), then the process progresses to S209. The process after S205 is the same as the process of FIG. 8, and thus, descriptions thereof will be omitted.

As described above, according to the present embodiment, the sorting location determination process can be easily performed by determining the sorting location on the basis of the signal received from the task range information transmitting devices 25.

### [Embodiment 4]

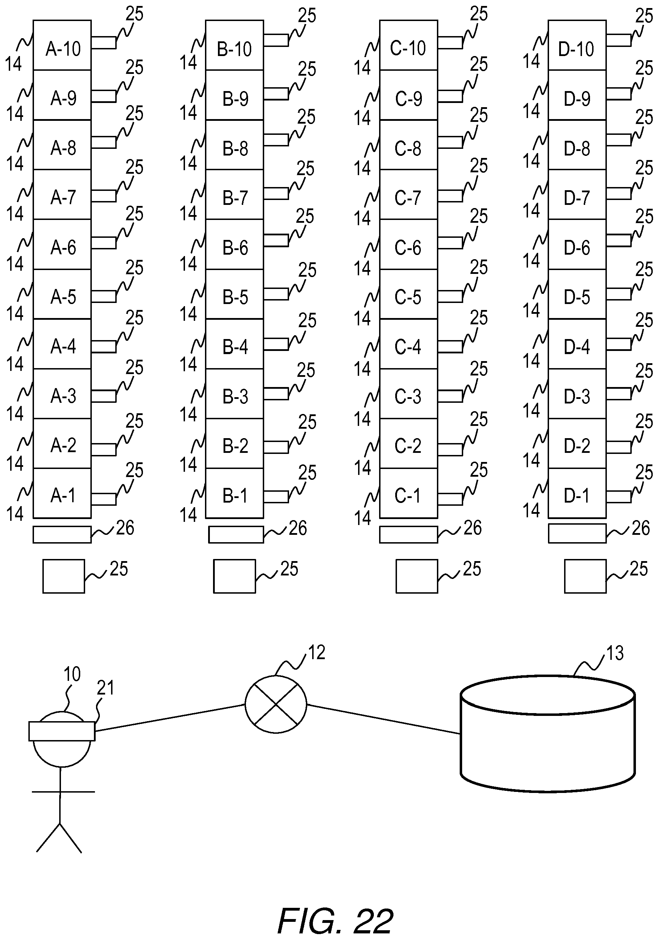

Embodiment 4 of the present invention will be described with reference to FIG. 22. Aside from the differences described below, the various components of the system of Embodiment 4 have the same functions as the components of Embodiments 1 to 3 that are displayed in FIGs. 1 to 21 and that are assigned the same reference characters, and thus, descriptions thereof are omitted.

In Embodiment 2, the position acquisition unit 113 was a barcode reader, and in S307, the position acquisition unit 113 read in graphic or characters to identify the position of the sorting shelves 14.

In the present embodiment, a case will be described in which a task range information transmitting device 25 is installed at each sorting destination, and the process of S307 is performed by the task range acquisition unit 211 reading in the intensity of the signal emitted by the task range information transmitting devices 25.

FIG. 22 is a descriptive view of an example of a system configuration according to Embodiment 4 of the present invention.

The system according to the present embodiment is constituted of a worker 10, a task aid terminal 21, a network 12, a task information management server 23, sorting destination shelves 14, and task range information transmitting devices 25. As shown in FIG. 22, one task range information transmitting device 25 is installed at each sorting shelf 14.

The task aid terminal 21 of the present embodiment is similar to the task aid terminal 21 of Embodiment 2 (see FIG. 16) other than that the storage 118 further stores a sorting location signal management database (not shown).

An example of a task information acquisition process and a task direction display process in the task aid terminal 21 will be described with reference to FIG. 17.

S301 to S306 are the same process as in FIG. 17, and thus, descriptions thereof will be omitted.

In S307, when the worker 10 sorts the relevant products at the designated sorting shelf 14, the worker notifies the task aid terminal 21 of completion of the sorting task. This notification method is similar to S203 of Embodiment 3, for example. When the control processing unit 122 receives a notification from the worker 10 through the input unit 134, the task range determination processing unit 213 confirms the intensity of the signal from the task range information transmitting devices 25, and if the signal intensity is greater than or equal to a prescribed value (80dB, for example), then the process progresses to S308. The determination of the signal intensity has a similar significance to the determination executed when progressing from S203 to S204 in Embodiment 3.

In S308, the task range determination processing unit 213 refers to the sorting location signal management database, determines the sorting location matching the ID of the confirmed signal, compares the identified sorting location with the sorting location 1444 of the individual task instruction information 123, and determines whether the two sorting locations match.

The task range information transmitting device 25 installed at each sorting shelf 14 has a unique ID. The sorting location signal management database manages the unique IDs of each of the task range information transmitting devices 25.

If, as a result of comparison, the IDs match (S308: Yes), then the process progresses to S309. If, as a result of comparison, the IDs do not match (S308: No), then the process progresses to S310. The process after S309 is the same as the process of FIG. 17, and thus, descriptions thereof will be omitted.

As described above, according to the present embodiment, the sorting location determination process can be easily performed by determining the sorting location on the basis of the signal received from the task range information transmitting devices 25.

The present invention is not limited to the embodiments above, and includes various modification examples. The embodiments above were described in detail in order to explain the present invention in an easy to understand manner, but the present invention is not necessarily limited to including all configurations described, for example. It is possible to replace a portion of the configuration of one embodiment with the configuration of another embodiment, and it is possible to add to the configuration of the one embodiment a configuration of another embodiment. Furthermore, other configurations can be added or removed, or replace portions of the configurations of the respective embodiments.

Some or all of the respective configurations, functions, processing units, processing means, and the like can be realized with hardware such as by designing an integrated circuit, for example. Additionally, the respective configurations, functions, and the like can be realized by software by the processor interpreting programs that execute the respective functions and executing such programs. Programs, data, tables, files, and the like realizing respective functions can be stored in a storage device such as a non-volatile semiconductor memory, a hard disk drive, or a solid state drive (SSD), or in a computer-readable non-transitory data storage medium such as an IC card, an SD card, or a DVD.

Control lines and data lines regarded as necessary for explanation have been described, but not all control lines and data lines in the product have necessarily been shown. In reality, almost all components can be thought of as connected to each other.

## Claims

1. A task aid system, comprising:
a terminal device; and
a server that manages task information,
wherein the terminal device is configured to:
determine, when information for identifying a position of the terminal device is inputted, a task location where a task was performed on the basis of the inputted information;
compare the determined task location where the task was performed with task instruction information generated by the server, and determine a task location where a next task is to be performed; and
output information indicating a direction of the determined task location where the next task is to be performed.

2. The task aid system according to claim 1,
wherein the terminal device has:
an input unit into which the information for identifying the position of the terminal device is inputted;
a communication unit that receives the task instruction information from the server;
a storage unit that stores the task instruction information;
an output unit that outputs at least a portion of the task instruction information; and
a processor coupled to the input unit, the communication unit, the output unit, and the storage unit,
wherein the task instruction information includes information of an order in which the tasks are to be performed and a task location where each task is to be performed,
wherein the processor is configured to:
determine the task location where the task was performed on the basis of the information for determining the position of the terminal device; and
determine a direction of the task location where the next task is to be performed on the basis of the task location where the task was performed and the task instruction information stored in the storage unit, and
wherein the output unit is configured to output information indicating the determined direction.

3. The task aid system according to claim 2,
wherein the storage unit is configured to store at least layout information indicating a positional relationship between the task location where the task was performed and the task location where the next task is to be performed, and
wherein the processor is configured to determine the direction of the task location where the next task is to be performed on the basis of the task location where the task was performed, the task instruction information stored in the storage unit, and the layout information.

4. The task aid system according to claim 3,
wherein the processor is configured to determine a distance between the task location where the task was performed and the task location where the next task is to be performed on the basis of the task location where the task was performed, the task instruction information stored in the storage unit, and the layout information, and
wherein the output unit is configured to output information indicating the determined distance.

5. The task aid system according to claim 4,
wherein the input unit includes a reception unit for a wireless signal,
wherein the input unit is configured to receive the wireless signal at the task location where the task was performed, and
wherein the processor is configured to determine the task location where the task was performed on the basis of the wireless signal received by the input unit.

6. The task aid system according to claim 5, further comprising:
a plurality of transmission devices that each transmit the wireless signal,
wherein each of the plurality of transmission devices is associated with an area including a plurality of said task locations,
wherein the wireless signal includes information enabling identification of the transmission device that is a transmission source thereof,
wherein the storage unit is configured to store intensity information indicating an intensity of the wireless signal received at each of the task locations, and
wherein the processor is configured to:
determine the area corresponding to the transmission device that transmitted the strongest wireless signal on the basis of the wireless signal received by the input unit; and
determine the task location where the task was performed in the determined area by comparing the intensity of the strongest wireless signal with the intensity information.

7. The task aid system according to claim 4, further comprising:
a plurality of transmission devices that are provided at each of the task locations, and that each transmit a wireless signal,
wherein the wireless signal transmitted from each of the transmission devices includes unique identification information,
wherein the input unit includes a reception unit for the wireless signal,
wherein the storage unit is configured to store signal management information for associating the identification information included in the wireless signal transmitted from each of the transmission devices with each of the task locations where each transmission device is provided, and
wherein the processor is configured to determine, if the intensity of the wireless signal received by the input unit exceeds a prescribed threshold, as the task location where the task was performed, the task location where the transmission device that transmitted the wireless signal is provided, on the basis of the identification information of the wireless signal and the signal management information.

8. The task aid system according to claim 4,
wherein the terminal device further has a direction detection unit that detects a direction of the terminal device,
wherein the processor is configured to determine a relative direction of the task location where the next task is to be performed in relation to the direction detected by the direction detection unit, and
wherein the output unit is configured to output the determined relative direction.

9. The task aid system according to claim 8, further comprising:
one or more markers,
wherein the direction detection unit includes a gyro sensor, and
wherein the processor is configured to determine the relative direction of the task location where the next task is to be performed with reference to an output from the direction detection unit when an orientation of the terminal device in relation to the marker satisfies a prescribed condition.

10. The task aid system according to claim 3,
wherein each task location displays identification information of each of the task locations,
wherein the input unit includes a reading device for the identification information,
wherein the processor is configured to determine the task location where the task was performed on the basis of the identification information read by the input unit, and
wherein the output unit is configured to stop output of information indicating the determined direction after a prescribed time elapses.

11. A terminal device, comprising:
an input unit into which information for identifying a position is inputted;
a storage unit that stores task instruction information including information of an order in which tasks are to be performed and a task location where each task is to be performed;
an output unit that outputs at least a portion of the task instruction information; and
a processor coupled to the input unit, the output unit, and the storage unit,
wherein the processor is configured to:
determine, when information for identifying a position of the terminal device is inputted to the input unit, a task location where a task was performed on the basis of the inputted information; and
determine a direction of the task location where a next task is to be performed on the basis of the task location where the task was performed and the task instruction information stored in the storage unit, and
wherein the output unit is configured to output information indicating the determined direction.

12. The terminal device according to claim 11,
wherein the storage unit is configured to store at least layout information indicating a positional relationship between the task location where the task was performed and the task location where the next task is to be performed, and
wherein the processor is configured to determine the direction of the task location where the next task is to be performed on the basis of the task location where the task was performed, the task instruction information stored in the storage unit, and the layout information.

13. The terminal device according to claim 12,
wherein the processor is configured to determine a distance between the task location where the task was performed and the task location where the next task is to be performed on the basis of the task location where the task was performed, the task instruction information stored in the storage unit, and the layout information, and
wherein the output unit is configured to output information indicating the determined distance.

14. A server, comprising:
a communication unit;
a storage unit; and
a processor coupled to communication unit and the storage unit,
wherein the storage unit is configured to store:
delivery destination management information for managing a delivery destination for items to be sorted;
sorting item warehousing information for managing a warehousing state for the items to be sorted; and
task instruction management information for managing task locations where sorting tasks for the items to be sorted are to be performed, a number of items to be sorted, and workers performing the sorting tasks,
wherein the processor is configured to generate the task instruction information of each worker on the basis of the task instruction management information, and
wherein the communication unit is configured to transmit the task instruction information to a terminal device of each worker.
